# EUROPÄISCHE PATENTSCHRIFT

(11) **EP 1 536 537 B1**
(45) Veröffentlichungstag und Bekanntmachung des Hinweises auf die Patenterteilung: **04.01.2012**
(21) Anmeldenummer: 04090436.9
(22) Anmeldetag: 16.11.2004
(51) Int. Cl.: H02H 3/08, H02H 3/05

(54) **Sicherung für das Abschalten einer im sicheren Betrieb betriebenen sicherungstechnischen Einrichtung**
Fuse for disconnecting a protection related installation operated in a safe mode
Fusible pour la disconnexion d'installation de sécurité fonctionnant en mode de sécurité

(30) Priorität: 25.11.2003 DE 10355879
(43) Veröffentlichungstag der Anmeldung: 01.06.2005
(73) Patentinhaber: SIEMENS AKTIENGESELLSCHAFT, 80333 München (DE)
(72) Erfinder: Essmann, Klaus, 38530 Didderse (DE); Priebe, Alexander, 38108 Braunschweig (DE)

(56) Entgegenhaltungen:
- WO-A1-02/093709
- WO-A1-03/077396
- US-A- 4 717 985

## Beschreibung

Die Erfindung betrifft eine Sicherung für das Abschalten einer im sicheren Betrieb betriebenen sicherungstechnischen Einrichtung.

Sicherungen sind in Form von Schmelzsicherungen als auch als Sicherungsautomaten bekannt. Schmelzsicherungen werden dabei in die zu sichernde Stromleitung geschaltet und schmelzen, wenn in der Stromleitung ein entsprechender Überstrom auftritt. Bei den Sicherungsautomaten kann beispielsweise ein Bimetallstreifen verwendet werden, der in der Stromleitung angeordnet wird, so dass der Strom durch ihn hindurch fließt. Bei Überstrom verbiegt sich der Bimetallstreifen aufgrund seiner Erwärmung, wodurch der vom Bimetallstreifen gebildete Schalter geöffnet wird. Bekannt sind weiter Sicherungsautomaten, welche die Spannung an einem in die Stromleitung geschalteten Shunt abgreifen und bei einem entsprechenden Spannungsabfall die Stromleitung unterbrechen, beispielsweise durch Schalten eines Relais.

Aus der veröffentlichen internationalen Patentanmeldung WO 03/077396 A1 ist ein Leistungsschalter mit Stromerfassungsmitteln, einem mikroprozessorgesteuerten Auslöser und einer Bypass-Schaltung bekannt, die mit einer die Funktionsfähigkeit des Mikroprozessors überwachenden Watchdog-Schaltung zusammenarbeitet. Der bekannte Leistungsschalter zeichnet sich hierbei dadurch aus, dass der Bypass-Schaltung in Abhängigkeit von der momentanen Versorgungsspannung eine umschaltbare Referenzspannung zur Verfügung gestellt wird.

Weiter sind im sicheren Betrieb arbeitende sicherungstechnische Einrichtungen bekannt, insbesondere Signallampen, Weichenantriebe, Achszähler, Freimeldeeinrichtungen und dgl. Derartige Einrichtungen können mittels eines sicheren Rechners gesteuert werden, der dazu z.B. zweikanalig ausgeführt ist.

Nachteilig ist bei den bekannten Sicherungen, dass deren Ansprech- und Auslöseverhalten nicht steuerbar ist. Es müssen folglich für die jeweiligen Lastströme entsprechende Sicherungsautomaten oder Schmelzsicherungen implementiert werden. Darüber hinaus sind die bekannten Sicherungen relativ langsam. Außerdem ist der Entwicklungsaufwand für Sicherungen mit spezifischen Kennlinien relativ hoch.

Die Aufgabe der Erfindung ist es, eine Sicherung für das Abschalten einer im sicheren Betrieb betriebenen sicherungstechnischen Einrichtung vorzuschlagen, welche die o. g. Nachteile nicht aufweist.

Die Lösung dieser Aufgabe ist durch die im Anspruch 1 angegebenen Merkmale gegeben. Durch die kennzeichnenden Merkmale der Unteransprüche ist die Sicherung in vorteilhafter Weise weiter ausgestaltet.

Die Lösung sieht vor, dass in der Laststromleitung ein Stromsensor mit einer Strommesseinrichtung vorgesehen ist, die einen softwaregesteuerten Controller aufweist, der den Lastpfad der Einrichtung abschaltet, wenn nach einem vorgegebenen Kriterium mit mindestens einem Überstromschwellwert ein Überstrom fließt, dass an den Stromsensor zusätzlich eine Hardwaresicherung angeschlossen ist, die mindestens einen vom Controller hardwaremäßig einstellbaren Überstromschwellwert aufweist, bei dessen Überschreitung die Hardwaresicherung sofort ein Ausschaltsignal generiert, das den Lastpfad der sicherungstechnischen Einrichtung abschaltet, dass an die Hardwaresicherung eine Testeinrichtung angeschlossen ist, durch die ein Überstrom simulierbar ist und dass die Simulation des Überstroms von einem übergeordneten sicheren Rechner über den Controller ausgelöst und das durch die Hardwaresicherung generierte Ausschaltsignals überwacht wird. Die Sicherung besteht also aus einer schnellen Hardwaresicherung, deren Schwellwerte vorgebbar sind, und einer konfigurierbaren "Software-Sicherung" mittels Controller und Strommesseinrichtung. Diese ist projektierbar, d. h. es ist softwaremäßig ein Kriterium vorgebbar, das einen Überstromschwellwert umfasst, nach dem entschieden wird, wann der fließende Leitungsstrom ein Überstrom ist. Wesentlich bei dieser Sicherung ist, dass die Hardwaresicherung mittels des Controllers bezüglich ihres Überstromschwellwerts nahezu frei einstellbar ist. Dabei reagiert die elektronische Sicherung sofort und dabei noch schneller als herkömmliche Sicherungen. Insbesondere sind spezielle Kennlinien mit dieser Sicherung einfach nachbildbar. Um einen sicheren Betrieb einer sicherungstechnischen Einrichtung zu gewährleisten, ist die Sicherung mit einer Testeinrichtung versehen, die von dem sicheren Rechner aus durch Ansprechen des Controllers ausgelöst wird, wobei die Überwachung des Ausschaltsignals ebenfalls vom Controller registriert wird und nur die Daten für das Auslesen der Sicherung an den sicheren Rechner übertragen werden. Im Unterschied zu einer Schmelzsicherung ist die elektronische Sicherung nicht unbrauchbar; ihr Zustand kann jeweils zurückgelesen werden.

Zweckmäßigerweise wird die Testeinrichtung jeweils bei ausgeschalteter sicherungstechnischer Einrichtung aktiviert.

Eine einfache Ausführung sieht vor, dass der Stromsensor als Shunt in der Laststromleitung ausgebildet ist, an dem der laststrombedingte Spannungsabfall gemessen wird.

Um den Test auf eine Zeitmessung zurückzuführen, was prüftechnisch relativ einfach ist, wird zur Simulation des Überstroms ein Spannungs-Rampengenerator gestartet, der einen zeitlich linearen Stromanstieg simuliert, und dass der Zeitpunkt des Auslösens bei der eingestellten Schwelle vom Controller überwacht wird.

Zur Verbesserung des Ansprech- und Auslöseverhaltens ist der Überstromschwellwert der Hardwaresicherung an den bekannten oder typischen zeitlichen Verlauf des überwachten Laststroms der Einrichtung anpassbar.

Als spezielle Anpassung wird vorgeschlagen, den Sicherungswert laufend zu ändern, derart, dass der vor dem Einschalten der sicherungstechnischen Einrichtung hochgesetzte Überstromschwellwert anschließend wieder schrittweise bis auf seinen Normalwert verringert wird.

Der Controller ist mit geringem Aufwand herstellbar, wenn dieser als Mikrocontroller ausgebildet ist, der zumindest mit dem der sichere Rechner kommuniziert, um den Test der Hardwaresicherung durchzuführen.

Wenn das vorgegebene Kriterium mit mindestens einem Schwellwert ein Trägheitsverhalten nach Art eines Sicherungsautomaten nachbildet, ergibt sich eine kostengünstige Lösung für eine derartige Sicherung.

Ein Trägheitsverhalten nach Art eines Sicherungsautomaten ergibt sich insbesondere, wenn jeweils die Zeit zwischen dem Überschreiten und dem anschließenden Unterschreiten des Überstromschwellwerts des Controllers erfasst, mit einem von der Zeitdauer abhängigen Gewichtsfaktor multipliziert und anschließend aufsummiert wird, wobei dieser Summenwert bei Unterschreitung der Schwelle zeitlich stetig verringert wird (abklingt).

Damit die Sicherung insbesondere bei nachfolgendem Normalbetrieb richtig funktioniert, wird vorgeschlagen, dass die zeitlich stetige Verringerung einer Abklingfunktion mit einer vorgegebenen Zeitkonstante T erfolgt.

Die Erfindung wird nachfolgend anhand einer Zeichnung näher beschrieben. Es zeigen:
- Fig. 1: eine elektronische Sicherung,
- Fig. 2: ein Zeitdiagramm der Hardwaresicherung,
- Fig. 3: ein Zeitdiagramm der Überstromauswertung nach einem vorgegebenen Kriterium mit zwei Überstromschwellwerten und
- Fig. 4: ein Zeitdiagramm der Überstromauswertung für Gleichstrom mit einem einzigen Überstromschwellwert.

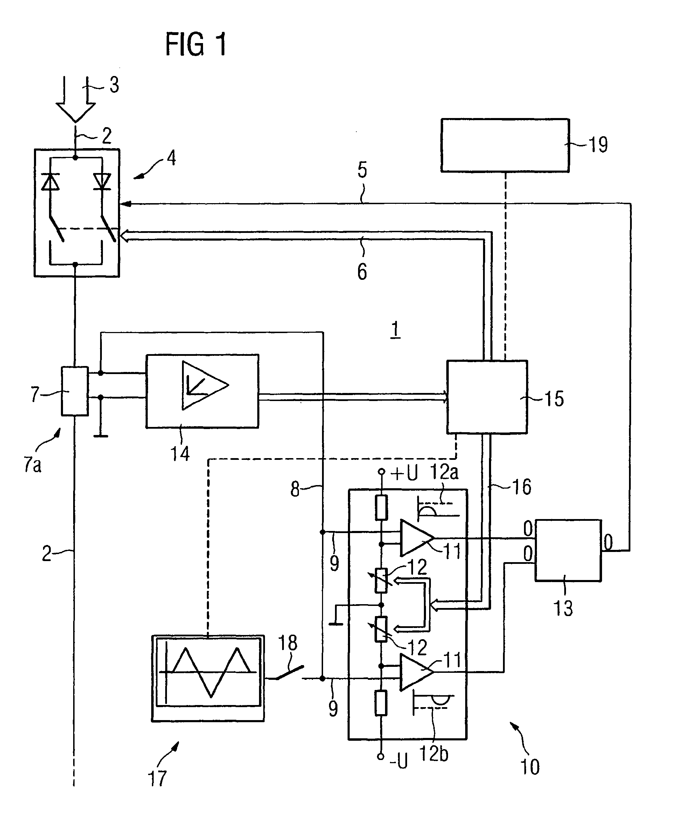

Fig. 1 zeigt eine Sicherung 1 für das Abschalten einer im sicheren Betrieb betriebenen sicherungstechnischen Einrichtung, beispielsweise einer Signallampe, eines Weichenantriebs, eines Achszählers, einer Freimeldeeinrichtung und so weiter. Von der Einrichtung ist in Fig. 1 nur eine Laststromleitung 2 (der Lastpfad der Einrichtung) dargestellt. Der Pfeil 3 in Fig. 1 kennzeichnet schematisch die Richtung des Laststroms. In der Laststromleitung 2 ist ein Schalter 4 angeordnet, durch den die Laststromleitung und damit die Stromversorgung der Einrichtung unterbrochen werden kann. Die Unterbrechung erfolgt bei Auftreten eines Überstroms in der Laststromleitung 2 durch die Sicherung 1, die hierzu schaltungstechnisch über Verbindungsleitungen 5, 6 mit dem Schalter 4 verbunden ist, über welche die Sicherung 1 bei Auftreten eines Überstroms ein Ausschaltsignal an den Schalter 4 gibt.

Zur Erfassung des Überstroms ist in die Laststromleitung 2 ein Shunt 7 (Widerstand) als Stromsensor 7a geschaltet, an dem eine zum Strom 3 proportionale Spannung abfällt. Bei diesem Widerstand kann es sich selbstverständlich auch um einen induktiven Widerstand und dergleichen handeln.

Diese Wechselspannung wird über eine Verbindung 8 an die beiden Eingänge 9 einer Hardwaresicherung 10 gegeben, die hier - wie in Fig. 1 angedeutet - mit zwei Operationsverstärkern 11 aufgebaut ist. Mittels der beiden Potentiometer 12 können ein positiver sowie ein negativer Überstromschwellwert 12a, 12b eingestellt werden, je einer für den positiven und je einer für den negativen Teil der am Shunt 7 abfallenden Spannung. Beide Überstromschwellwerte 12a, 12b sind hier gleich groß gewählt. Beim Auftreten eines Überstroms werden von den Operationsverstärkern 11 die Signale verglichen und an eine logische Einrichtung 13 gegeben, die bei Überschreiten des positiven oder des negativen Überstromschwellwerts 12a, 12b ein Ausschaltsignal über die Verbindungsleitung 5 an den Schalter 4 gibt.

Die am Shunt 7 abfallende Wechselspannung wird außerdem von einer Strommesseinrichtung 14 erfasst und der anhand dieser Wechselspannung von der Strommesseinrichtung 14 bestimmte Strom an einen angeschlossenen softwaregesteuerten Controller 15 übergeben, der als Mikrocontroller überall ausgebildet ist. In Abhängigkeit von zwei vorgegebenen Controller-Überstromschwellwerten entscheidet der Controller 15 nach einem vorgegebenen Kriterium, ob ein Überstrom vorliegt oder nicht. Bei den Controller-Überstromschwellwerten handelt es sich wiederum um einen positiven und einen negativen Wert, je einen für den positiven und je einen für den negativen Teil des durch den Shunt 7 fließenden Wechselstroms. DurchBewertung der Zeit und des Überstroms gibt der Controller 15 bei Erkennung einer Überlast ein Ausschaltsignal über die Verbindungsleitung 6 an den Schalter 4.

Der Controller 15 ist außerdem über eine Verbindung 16 mit der Hardwaresicherung 10 verbunden. Über diese Verbindung 16 sind die beiden Überstromschwellwerte 12a, 12b der Hardwaresicherung vom Controller 15 hardwaremäßig einstellbar. Dies ist in Fig. 1 dadurch schematisch dargestellt, dass die Verbindung 16 auf die beiden Potentiometer 12 einwirkt. Dabei kann es sich bei den beiden Potentiometern 12 um einstellbare digitale Potentiometer handeln.

Die Einstellung der Überstromschwellwerte 12a, 12b durch den Controller 15 kann dazu genutzt werden, diese an den bekannten oder typischen zeitlichen Verlauf des überwachten Laststroms der Einrichtung anzupassen, d. h. ihn zeitlich zu verändern.

Weiter ist in Fig. 1 eine Testeinrichtung 17 dargestellt, die an die Hardwaresicherung 10 (deren Eingänge 9) anschließbar ist, was durch den Schalter 18 schematisch gezeigt ist. Mittels der Testeinrichtung 17 kann bei geschlossenem Schalter 18 ein Überstrom simuliert werden. Dies erfolgt zweckmäßiger Weise bei ausgeschalteter sicherungstechnischer Einrichtung. Die Simulation des Überstroms wird dabei von einem übergeordneten sicheren Rechner 19 über den Controller 15 ausgelöst (Schließen des Schalters 18). Das Auslösen ist mit dem Start eines Spannungsrampengenerators verbunden, der einen zeitlich linearen Spannungsanstieg auf die beiden Eingänge 9 gibt und damit einen linearen Stromanstieg simuliert. Überwacht wird vom Controller 15 der Zeitpunkt des Auslösens des Ausschaltsignals; dieser Zeitpunkt wird an den sicheren Rechner 19 weitergegeben, der anhand der Zeitdifferenz zwischen dem Startzeitpunkt und dem Auslösen des Ausschaltsignals durch die Hardwaresicherung 10 die korrekte Arbeitsweise der Hardwaresicherung 10 überprüft.

Die Überprüfung kann auch erfolgen, indem erst nachträglich festgestellt wird, bei welchem Wert die Sicherung ausgelöst hat.

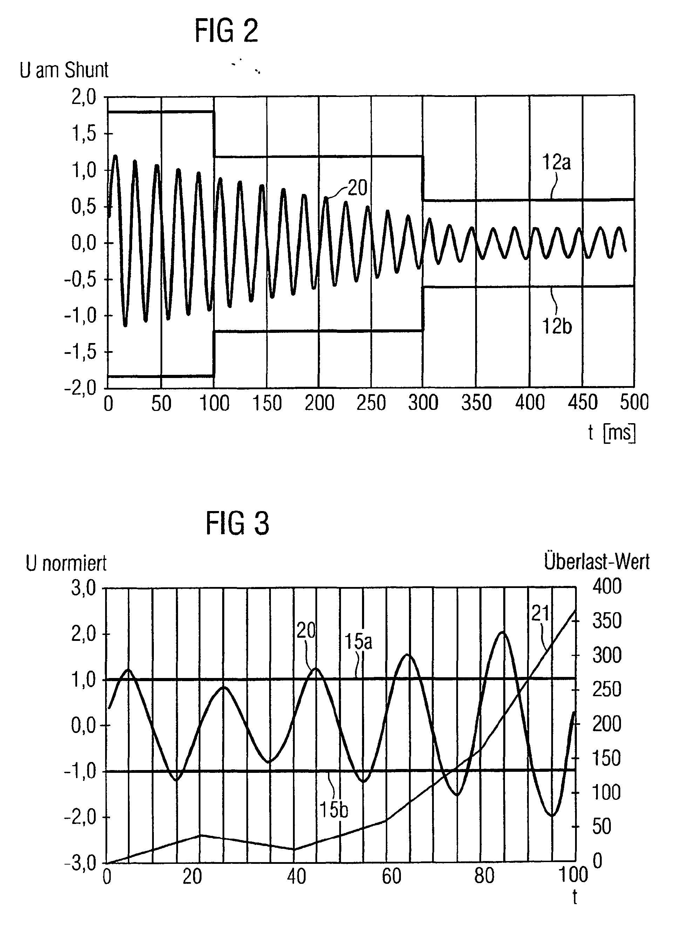

Fig. 2 zeigt schematisch die schrittweise Anpassung der Überstromschwellwerte 12a, 12b anhand eines Diagramms, bei dem auf der Y-Achse der Spannungsabfall U am Shunt 7 und auf der X-Achse die Zeit in Millisekunden (ms) aufgetragen ist. Der Spannungsabfall U hat die Form einer zeitlich abklingenden Sinusschwingung 20, wie sie bei einigen sicherungstechnischen Einrichtungen nach dem Einschalten auftritt. Dieser abklingende Verlauf der Sinusschwingung 20 ist bekannt, weshalb der Überstromschwellwert 12a, 12b zu Beginn jeweils auf einen hohen Wert von 1,8 gesetzt worden ist. Fig. 2 zeigt, dass die beiden Überstromschwellwerte 12a, 12b jeweils nach einer vorgegebenen Zahl von Zeiteinheiten schrittweise verringert wird, wobei nach 300 ms der Normalwert erreicht und eingestellt wird. Auf diese Weise wird erreicht, dass die Einrichtung nicht bereits beim Einschalten aufgrund des hohen Laststroms von der Hardwaresicherung 10 ausgeschaltet wird. Andererseits werden Überströme nach Abklingen des Einschwingvorgangs sicherer erfasst, was mit den hohen Überstromschwellwerten 12a, 12b so nicht möglich wäre. Grundsätzlich kann es sich hier auch um eine beliebige andere Kurvenform handeln.

Fig. 3 zeigt ein schematisches Diagramm, wobei auf der linken Y-Achse der normierte Spannungsabfall U am Shunt 7 und auf der X-Achse die Zeit aufgetragen ist. Zusätzlich zeigt die rechte Y-Achse einen Überlastwert, wie er vom Controller anhand des zeitlichen Verlaufs des Spannungsabfalls U bei vorgegebenem Kriterium ermittelt worden ist.

Das vorgegebene Kriterium hat zum Ziel, das Trägheitsverhalten eines Sicherungsautomaten nachzubilden. Hierzu sind softwaremäßig zwei Überstromschwellwerte 15a, 15b im Controller 15 vorgegeben, die in Fig. 3 von der den zeitlichen Verlauf des Laststroms repräsentierenden Schwingung 20 mehrmals überschritten werden. Der Controller 15 erfasst jeweils die Zeit (Zeitdauer) zwischen dem Überschreiten und dem anschließenden Unterschreiten des Überstromschwellwerts 15a bzw. 15b und multipliziert diese mit einem Gewichtsfaktor, der von der Zeitdauer, in der ein Überstrom vorliegt, abhängt. Dabei werden größere Überlastströme bzw. Überlast-Zeitdauern mit einem größeren Gewichtsfaktor multipliziert. Dieser Wert wird anschließend auf einen Summenspeicher des Controllers 15 gegeben. Die sich auf diese Weise ergebende Gesamtsumme wird gleichzeitig stetig verringert, beispielsweise durch eine exponentielle zeitliche Abklingfunktion mit einer vorgegebenen Zeitkonstanten T. Dieses Abklingen ist in Fig. 3 nicht zu erkennen, jedenfalls zeigt die Überlastwertkurve 21 in Fig. 3 eine zeitliche Zunahme des Überlast-Werts, bedingt durch die größer werdenden Überlastströme. Der Schalter 4 wird mittels des Controllers 15 ausgeschaltet, wenn der Überlastwert beispielsweise von 350 überschritten wird. Geht die Schwingung 20 vor Auslösen des Schalters 4 wieder in das von den Überstromschwellwerten 15a, 15b gebildete Toleranzband zurück, so klingt der Überlastwert mit der Zeit wieder ab, d.h. er geht in einem solchen Falle wieder auf Null zurück.

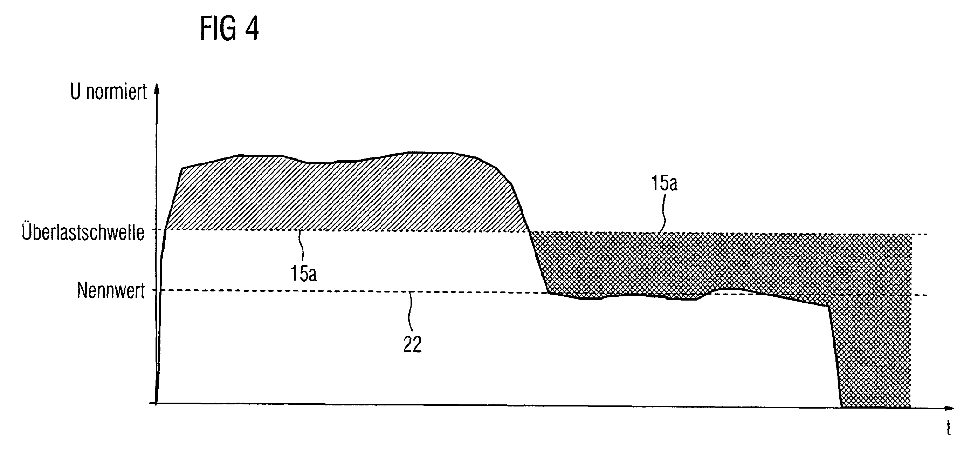

Fig. 4 zeigt ein schematisches Diagramm für eine entsprechende Auswertung der Überlast bei Gleichstrom. Der hier einzige Überstromschwellwert 15a (die Überlastschwelle) wird softwaremäßig im Controller 15 oberhalb eines Nennwerts 22 eingestellt. Bei Überschreiten dieses Schwellwerts 15a wird die Höhe der Überschreitung ebenfalls (s.o.) mit der Überlast-Zeitdauer multipliziert. Dieser Wert wird als Überlastwert wiederum in den Summenspeicher des Controllers 15 gegeben und zeitlich stetig verringert, wenn der Überstromschwellwert 15a unterschritten wird, wobei die Unterschreitung entsprechend mit der Zeitdauer der Unterschreitung multipliziert wird.

## Patentansprüche

1. Sicherung (1) für das Abschalten einer im sicheren Betrieb betriebenen sicherungstechnischen Einrichtung, insbesondere Signallampe, Weichenantrieb, Achszähler, Freimeldeeinrichtung und dergleichen, beim Auftreten eines Überstroms in einer ihrer Laststromleitungen (2),
wobei in der Laststromleitung (2) eine Strommesseinrichtung (14) mit einem Stromsensor (7a) vorgesehen ist, die mit einem softwaregesteuerten Controller (15) verbunden, der den Lastpfad der Einrichtung abschaltet, wenn nach einem vorgegebenen Kriterium mit mindestens einem Überstromschwellwert (15a, 15b) ein Überstrom fließt,
wobei an den Stromsensor (7a) zusätzlich eine Hardwaresicherung (10) angeschlossen ist, die mindestens einen vom Controller (15) hardwaremäßig einstellbaren Überstromschwellwert (12a, 12b) aufweist, bei dessen Überschreitung die Hardwaresicherung (10) sofort ein Ausschaltsignal generiert, das den Lastpfad der sicherungstechnischen Einrichtung abschaltet, **dadurch gekennzeichnet, dass** an die Hardwaresicherung (10) eine Testeinrichtung (17) angeschlossen ist, durch die ein Überstrom simulierbar ist, und
wobei die Simulation des Überstroms von einem übergeordneten sicheren Rechner (19) über den Controller (15) ausgelöst und das durch die Hardwaresicherung (10) generierte Ausschaltsignal überwacht wird.

2. Sicherung nach Anspruch 1,
**dadurch gekennzeichnet,**
**dass** die Testeinrichtung (17) bei ausgeschalteter sicherungstechnischer Einrichtung aktiviert wird.

3. Sicherung nach Anspruch 1 oder 2,
**dadurch gekennzeichnet,**
**dass** der Stromsensor (7a) ein Shunt (7) in der Laststromleitung (2) ist, an dem der laststrombedingte Spannungsabfall gemessen wird.

4. Sicherung nach einem der Ansprüche 1 - 3,
**dadurch gekennzeichnet,**
**dass** zur Simulation des Überstroms ein Spannungs-Rampengenerator gestartet wird, der einen zeitlich linearen Stromanstieg simuliert, und dass der Zeitpunkt des Auslösens des Ausschaltsignals bei der eingestellten Schwelle vom Controller überwacht wird.

5. Sicherung nach einem der Ansprüche 1 - 4,
**dadurch gekennzeichnet,**
**dass** der Überstromschwellwert (12a, 12b) der Hardwaresicherung (10) an den bekannten oder typischen zeitlichen Verlauf des überwachten Laststroms der Einrichtung anpassbar ist.

6. Sicherung nach Anspruch 5,
**dadurch gekennzeichnet,**
**dass** der vor dem Einschalten der sicherungstechnischen Einrichtung hochgesetzte Überstromschwellwert (12a, 12b) anschließend wieder schrittweise bis auf seinen Normalwert verringert wird.

7. Sicherung nach einem der Ansprüche 1 - 6,
**dadurch gekennzeichnet,**
**dass** der Controller (15) als Mikrocontroller ausgebildet ist, der mit dem der sichere Rechner (19) kommuniziert, um den Test der Hardwaresicherung (10) durchzuführen.

8. Sicherung nach einem der Ansprüche 1 - 7,
**dadurch gekennzeichnet,**
**dass** das vorgegebene Kriterium mit mindestens einem Schwellwert (15a, 15b) ein Trägheitsverhalten nach Art eines Sicherungsautomaten nachbildet.

9. Sicherung nach Anspruch 8,
**dadurch gekennzeichnet,**
**dass** jeweils die Zeit zwischen dem Überschreiten und dem anschließenden Unterschreiten des Überstromschwellwerts (15a, 15b) des Controllers (15) erfasst, mit einem von der Zeitdauer abhängigen Gewichtsfaktor multipliziert und anschließend aufsummiert wird und dass bei Unterschreitung dieser Summenwert zeitlich stetig verringert wird.

10. Sicherung nach Anspruch 9,
**dadurch gekennzeichnet,**
**dass** die zeitlich stetige Verringerung einer Abklingfunktion mit einer vorgegebenen Zeitkonstante T erfolgt.

## Claims

1. Fuse (1) for disconnecting a protection related device which is operated in a safe mode, in particular a signal lamp, switch drive, axle counter, track vacancy signaling device and the like, when an overcurrent occurs in its load current lines (2), with a current measurement device (14) being provided in the load current line (2), having a current sensor (7a) which is connected to a software-controlled-controller (15) which disconnects the load path of the device when an overcurrent flows on the basis of a predetermined criterion with at least one overcurrent threshold value (15a, 15b),
with a hardware fuse (10) additionally being connected to the current sensor (7a) which hardware fuse (10) has at least one overcurrent threshold value (12a, 12b) which can be adjusted on a hardware basis by the controller (15) and which, when overshot, results in the hardware fuse (10) immediately generating a switch-off signal, which disconnects the load path of the protection related device,
**characterized**
**in that** the hardware fuse (10) is connected to a test device (17) by means of which an overcurrent can be simulated, and with the simulation of the overcurrent being initiated by a superordinate secure computer (19) via the controller (15), and with the switch-off signal that is generated by the hardware fuse (10) being monitored.

2. Fuse according to Claim 1,
**characterized**
**in that** the test device (17) is activated when the protection related device is switched off.

3. Fuse according to Claim 1 or 2,
**characterized**
**in that** the current sensor (7a) is a shunt (7) in the load current line (2) across which the voltage drop, which is dependent on the load current, is measured.

4. Fuse according to one of Claims 1-3,
**characterized**
**in that**, in order to simulate the overcurrent, a voltage ramp generator is started, which simulates a current rise which is linear over time, and in that the time of initiation of the switch-off signal at the selected threshold is monitored by the controller.

5. Fuse according to one of Claims 1-4,
**characterized**
**in that** the overcurrent threshold value (12a, 12b) of the hardware fuse (10) can be matched to the known or typical time profile of the monitored load current of the device.

6. Fuse according to Claim 5,
**characterized**
**in that** the overcurrent threshold value (12a, 12b), which is raised before the protection related device is switched on, is subsequently reduced in steps again to its normal value.

7. Fuse according to one of Claims 1-6,
**characterized**
**in that**, the controller (15) is in the form of a microcontroller, which communicates with the secure computer (19) in order to test the hardware fuse (10).

8. Fuse according to one of Claims 1-7,
**characterized**
**in that** the predetermined criterion with at least one threshold value (15a, 15b) simulates a behavior with inertia in the form of a safety cutout.

9. Fuse according to Claim 8,
**characterized**
**in that** the time between the overcurrent threshold value (15a, 15b) being overshot and then undershot is in each case detected by the controller (15), is multiplied by a weighting factor, which is dependent on the time duration, and is then added, and in that this sum value is reduced continuously over time when undershooting occurs.

10. Fuse according to Claim 9,
**characterized**
**in that** the continuous reduction of a decay function over time is carried out with a predetermined time constant (T).

## Revendications

1. Fusible ( 1 ) pour la déconnexion d'une installation de sécurité fonctionnant en mode de sécurité, notamment d'une lampe de signalisation, d'un entraînement d'aiguillage, d'un compteur d'essieu, d'un dispositif de voie libre et analogues, lors de l'apparition d'un courant de surcharge dans l'une de ses lignes ( 2 ) de courant de charge,
dans lequel il est prévu, dans la ligne ( 2 ) de courant de charge, un dispositif ( 14 ) de mesure du courant, qui a un capteur ( 7a ) de courant et qui est relié à un dispositif ( 15 ) de contrôle commandé par logiciel et interrompant le trajet de charge de l'installation, si, suivant un critère prescrit ayant au moins une valeur ( 15a, 15b ) de seuil de courant de surcharge, il passe un courant de surcharge,
dans lequel il est raccordé au capteur ( 7a ) de courant supplémentairement un fusible ( 10 ) matériel, qui a au moins une valeur ( 12a, 12b ) de seuil de courant de surcharge réglable du point de vue matériel par le dispositif ( 15 ) de commande, valeur de seuil pour le dépassement de laquelle le fusible ( 10a ) matériel produit immédiatement un signal de déconnexion, qui déconnecte le trajet de charge de l'installation de sécurité,
**caractérisé en ce qu'**au fusible ( 10 ) matériel est raccordé un dispositif ( 17 ) de test, par lequel un courant de surcharge peut être simulé, et
dans lequel la simulation du courant de surcharge est déclenchée par l'intermédiaire du dispositif ( 15 ) de commande par un ordinateur ( 19 ) de sécurité supérieur hiérarchiquement et le signal de déconnexion produit par le fusible ( 10 ) matériel est contrôlé.

2. Fusible suivant la revendication 1,
**caractérisé**
**en ce que** le dispositif ( 17 ) de test est activé lorsque l'installation de sécurité est débranchée.

3. Fusible suivant la revendication 1 ou 2,
**caractérisé**
**en ce que** le capteur ( 7a ) de courant est un shunt ( 7 ) dans la ligne ( 2 ) de courant de charge, sur lequel la chute de tension due au courant de charge est mesurée.

4. Fusible suivant l'une des revendications 1 à 3,
**caractérisé**
**en ce que**, pour la simulation du courant de surcharge, on fait démarrer un générateur de rampe de tension, qui simule une augmentation linéaire du courant en fonction du temps, et en ce que l'instant du déclenchement du signal de déconnexion pour le seuil réglé est contrôlé par le dispositif de commande.

5. Fusible suivant l'une des revendications 1 à 4,
**caractérisé**
**en ce que** la valeur ( 12a, 12b ) du seuil du courant de surcharge du fusible ( 10 ) matériel peut être adaptée à la courbe connue ou typique dans le temps du courant de charge contrôlé de l'installation.

6. Fusible suivant la revendication 5,
**caractérisé**
**en ce que** la valeur ( 12a, 12b ) de seuil du courant de surcharge relevée avant la connexion de l'installation de sécurité est ensuite rediminuée pas à pas jusqu'à sa valeur normale.

7. Fusible suivant l'une des revendications 1 à 6,
**caractérisé**
**en ce que** le dispositif ( 15 ) de commande est constitué en microdispositif de commande, qui communique avec l'ordinateur ( 19 ) de sécurité pour effectuer le test du fusible ( 10 ) matériel.

8. Fusible suivant l'une des revendications 1 à 7,
**caractérisé**
**en ce que** le critère prescrit ayant au moins une valeur ( 15a, 15b ) de seuil reproduit un comportement d'inertie à la manière d'un automate de sécurité.

9. Fusible suivant la revendication 8,
**caractérisé**
**en ce que** respectivement le temps qui s'écoule entre l'instant où l'on passe au-dessus et l'instant où l'on passe ensuite en dessous de la valeur ( 15a, 15b ) de seuil du courant de surcharge du dispositif ( 15 ) de commande est détecté, respectivement est multiplié par un facteur de pondération, qui dépend de la durée, et est ensuite sommé, et en ce que, si on passe en dessous, cette valeur de somme est diminuée constamment dans le temps.

10. Fusible suivant la revendication 9,
**caractérisé**
**en ce que** la diminution constante dans le temps d'une fonction de décroissance s'effectue avec une constance de temps T prescrite.
